Europäisches Patentamt

European Patent Office

Office européen des brevets

(19)

(11) Veröffentlichungsnummer : **0 115 019**
**B1**

(12)　　　　　　　　**EUROPÄISCHE PATENTSCHRIFT**

(45) Veröffentlichungstag der Patentschrift :
06.05.87

(51) Int. Cl.⁴ : **B 01 J　8/34**, B 01 J　8/38

(21) Anmeldenummer : **83112803.8**

(22) Anmeldetag : **20.12.83**

(54) **Verfahren und Anordnung zur Temperierung einer in einem Rohrreaktor in Form eines Festbettes angeordneten Schüttung.**

(30) Priorität : **29.12.82 DE 3248502**

(43) Veröffentlichungstag der Anmeldung :
**08.08.84 Patentblatt 84/32**

(45) Bekanntmachung des Hinweises auf die Patenterteilung : **06.05.87 Patentblatt 87/19**

(84) Benannte Vertragsstaaten :
**AT BE DE FR GB IT NL SE**

(56) Entgegenhaltungen :
**DD-A-　157 139**
**GB-A- 1 492 182**
**GB-A- 2 086 257**

(73) Patentinhaber : **BASF Aktiengesellschaft**
**Carl-Bosch-Strasse 38**
**D-6700 Ludwigshafen (DE)**

(72) Erfinder : **Ruehenbeck, Wolfgang, Dr.**
**Im Bettenklingen 17**
**D-6943 Birkenau (DE)**

## Beschreibung

Die Erfindung betrifft ein Verfahren zur Temperierung einer in einem Rohrreaktor in Form eines Festbettes angeordneten Schüttung und zur gleichzeitigen Wärmeabfuhr aus dem Festbett oder Wärmezufuhr in das Festbett mittels eines in einem Wärmetauscher strömenden Wärmeträgers sowie eine Anordnung zur Durchführung des Verfahrens.

Bei großtechnischen Verfahren zur Herstellung chemischer Produkte findet die Reaktion — beispielsweise eine heterogene Gaskatalyse oder eine Adsorption — oftmals in Rohrreaktoren oder Festbettreaktoren statt.

Solche Rohrreaktoren sind dadurch gekennzeichnet, daß der Katalysator in Form von Kugeln, Tabletten oder anderen geometrischen Abmessungen in die Reaktionsrohre eingegeben wird, die dann während der Reaktion von den reagierenden Gasen durchströmt werden. Bei den meist exothermen Prozessen werden die Reaktionsrohre von einem Kühlmedium (Wasser, Öl, Salzschmelzen, etc.) umspült. Mittels dieser Kühlmedien wird die Reaktionsenthalpie aus dem Rohrreaktor abgeführt. Wegen der geringen effektiven Wärmeleitfähigkeit der gasdurchströmten Schüttung und der begrenzten Wärmeübergangskoeffizienten an der Rohrwand sind bei Reaktionen mit starken Wärmetönungen die Reaktionsrohrdurchmesser begrenzt, so daß die erwünschte Kapazität der Rohrreaktoren nur durch Parallelschalten von vielen Einzelrohren — beispielsweise bis zu 22 000 — erzielt werden kann. Neben hohen Investitionskosten muß dabei zur Gleichverteilung der Reaktionsgase und des Kühlmediums ein zusätzlicher hoher technischer Aufwand getrieben werden. Der Erfindung liegt daher die Aufgabe zugrunde, die vorgenannten Nachteile zu vermeiden.

Diese Aufgabe wird erfindungsgemäß dadurch gelöst, daß die Temperierung des Festbettes mittels eines wärmeabführenden oder wärmezuführenden, durch die Zwischenräume der Schüttung strömenden Wirbelgutes vorgenommen wird, wobei der Wärmetauscher im Festbett oder in einer oberhalb des Festbettes ausgebildeten, aus dem Wirbelgut bestehenden Wirbelschicht angeordnet ist. Als vorteilhaft erweist sich dabei, das Wirbelgut in Zirkulation zu halten, wobei die Rezirkulation des Wirbelgutes einerseits in durch das Festbett hindurch führenden Rohren vorgenommen wird, bzw. andererseits außerhalb des Festbettes durchgeführt wird. Dabei ist es möglich, daß die Rezirkulation des Wirbelgutes entsprechend dem Wärmebedarf des Festbettes mittels geeigneter Förderorgane unabhängig von der Geschwindigkeit der reagierenden Gase im Festbett eingestellt werden kann.

Weitere Merkmale der erfindungsgemäßen Anordnung zur Durchführung des Verfahrens sind Gegenstand weiterer Ansprüche.

Bei dem erfindungsgemäßen Verfahren wird der konventionelle Mechanismus der Temperierung von Festbett-Reaktoren durch Wärmeübergang an Wänden ersetzt durch den wirkungsvolleren Mechanismus der Konvektion. Hierbei wird in das Festbett soviel eines gut riesel- und wirbelfähigen und gleichzeitig gut wärmeabführenden bzw. wärmezuführenden Wirbelgutes eingefüllt, daß nicht nur die Zwischenräume der Schüttung ausgefüllt sind, sondern auch ein beliebig hoher Überstand an Wirbelgut über der Schüttung entsteht. Beim Begasen dieser Anordnung mit den reagierenden Gasen bei einer optimalen Geschwindigkeit wird das Wirbelgut in den Zwischenräumen der Schüttung fluidisiert und es bildet sich über der Schüttung eine Wirbelschicht aus. Das fluidisierte Wirbelgut wird nun durch erfindungsgemäße Anordnungen — nachfolgend im Detail beschrieben — in Zirkulation versetzt und dabei durch das Festbett gefördert. Die Rezirkulation kann dabei innerhalb oder außerhalb des Festbettes erfolgen. Das zirkulierende Wirbelgut übernimmt dabei durch intensiven und direkten Kontakt mit den Festbettpartikeln und den reagierenden Gasen die Wärmeabfuhr oder Wärmezufuhr aus dem Festbett heraus oder in das Festbett hinein. Durch diese intensive, direkte Temperierung des Festbettes können auch Reaktionen mit starker Wärmetönung in Einrohr-Reaktoren durchgeführt werden, ohne daß, wie bei den bisher bekannten Systemen, die Rohrdurchmesser des Reaktors durch die begrenzte effektive Wärmeleitfähigkeit der Schüttung limitiert werden.

Verschiedene Ausführungsbeispiele der erfindungsgemäßen Anordnung sind in der Zeichnung dargestellt und werden im folgenen näher beschrieben.

Es zeigen

Figuren 1 und 1a einen Längs- und Querschnitt durch einen Einrohr-Reaktor mit einem zentralen Rohr für die Rezirkulation des Wirbelgutes und einem als Rohrschlange ausgebildeten Wärmetauscher

Figuren 2 und 2a einen Längs- und Querschnitt durch einen Einrohr-Reaktor mit vier am Innenumfang des Reaktors angeordneten Halbrohren für die Rezirkulation des Wirbelgutes und einem als Doppelmantel ausgebildeten Wärmetauscher

Figur 3 einen Längsschnitt durch eine weitere Möglichkeit der Anordnung zur Durchführung des Verfahrens

Figur 4 einen Längsschnitt durch eine Anordnung zur Durchführung des Verfahrens, wobei Rezirkulation und Wärmeabfuhr aus dem Festbett bzw. Wärmezufuhr in das Festbett außerhalb des Einrohr-Reaktors stattfinden.

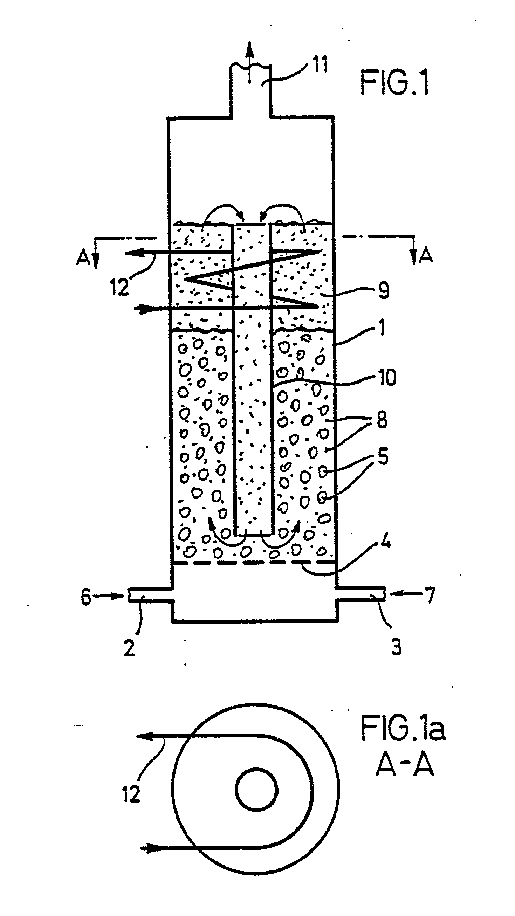

In dem in Figur 1 dargestellten Einrohr-Reaktor 1, ausgerüstet mit den Stutzen 2 und 3 befindet sich auf einem perforierten Boden 4 das Festbett 5 — bestehend aus einer Katalysatorschüttung. Über die Stutzen 2 und 3 treten die reagierenden Gase 6 und 7 in den Reaktor ein. Das in den Zwischenräumen des Festbettes und über dem Festbett als Wirbelschicht 9 liegende Wirbelgut 8 wird durch die Gase 6 und 7 fluidisiert. Im Reaktor befindet sich ein zentral angeordnetes Rohr 10, über das die Rezirkulation des Wirbelgutes erfolgt. Das Reaktionsgas verläßt den Reaktor über den Stutzen 11. Oberhalb des Festbettes, umgeben von dem als Wirbelschicht ausgebildeten Wirbelgut, ist ein als Rohrschlange ausgeführter Wärmetauscher 12 angeordnet, durch den ein Wärmeträger zum Wärmeaustausch zwischen Wirbelgut und Wärmeträger geführt wird.

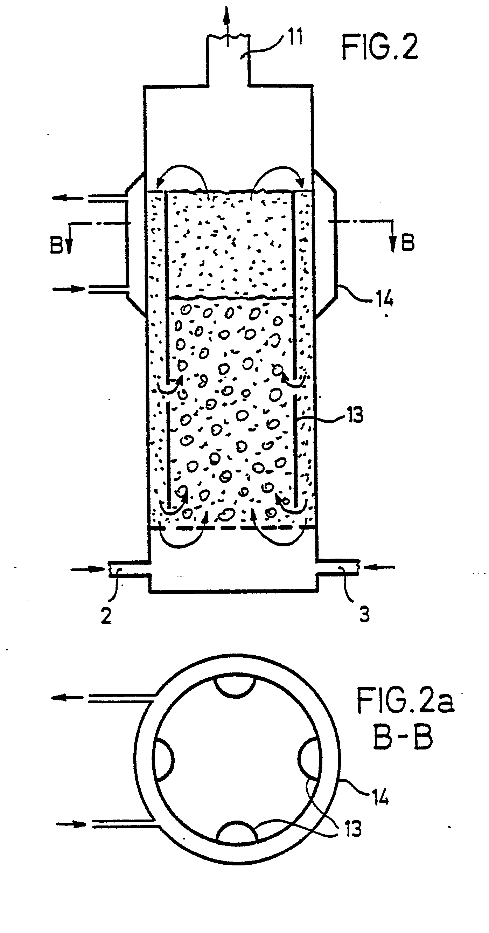

Figur 2 zeigt eine andere apparative Möglichkeit für die Rezirkulation des Wirbelgutes und die Anordnung des Wärmetauschers. An Stelle des zentral angeordneten Rohres zur Rezirkulation des Wirbelgutes befinden sich am Innenumfang des Einrohr-Reaktors 1 mehrere Halbrohre 13. Der Wärmetauscher ist an Stelle der Rohrschlange als Doppelmantel 14 in Höhe der Wirbelschicht ausgebildet.

In dem in Figur 2 dargestellten Einrohr-Reaktor, mit den Maßen : Durchmesser des Festbettes = 80 mm, Höhe des Festbettes = 1 000 mm, wurde ein mit Kohlenstoff belegter Katalysator durch Begasen mit Luft bei einer Temperatur von 600 °C regeneriert. Das Festbett wurde über einen Konidurboden begast. In die Zwischenräume des Festbettes wurde als inertes Wirbelgut soviel abriebfestes Material in Form von Kugeln in der Fraktion 150 bis 250 μm eingefüllt, daß bei einer Geschwindigkeit von 0,3 m/sek, bezogen auf den Querschnitt des leeren Reaktors, über dem Festbett eine Wirbelschicht von ca. 300 mm Höhe entstand. Über den Wärmeträger, der durch den Doppelmantel als Heizmedium geleitet wurde, wurde der gesamte Reaktor auf 350 °C aufgeheizt. Als Wirbelgas diente während der Aufheizphase Stickstoff. Bei der Umstellung von Stickstoff auf Luft setzte die Regenerierung ein, die Reaktortemperatur stieg auf die gewünschte Temperatur von 600 °C und konnte dort während des gesamten Regenerierens gehalten werden. Die Reaktionsenthalpie der Kohlenstoffverbrennung konnte zuverlässig durch den Wärmeträger, der durch den Doppelmantel als Kühlmedium geleitet wurde, abgeführt werden.

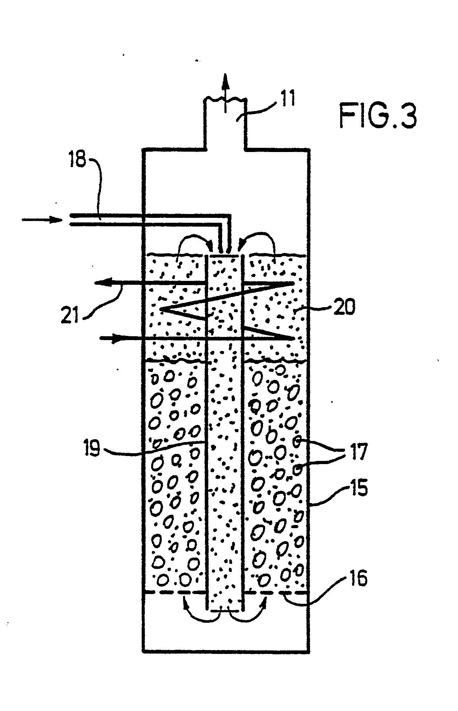

In dem in Figur 3 dargestellten Einrohr-Reaktor 15 befindet sich auf einem perforierten Boden 16 das Festbett 17. Das Wirbelgut lagert hierbei auch unterhalb des perforierten Bodens. Die zu reagierenden Gase — die gleichzeitig als Wirbelgas wirken — werden mit hoher Geschwindigkeit über ein in den Reaktor hineinführendes Rohr 18 und anschließend über das zentral angeordnete Rohr 19 geleitet und am Ende des perforierten Bodens 16 umgelenkt, so daß das Wirbelgut mitgerissen wird. Wirbelgut und Wirbelgas durchströmen gemeinsam das Festbett und bilden oberhalb des Festbettes die Wirbelschicht 20, durch die der Wärmetauscher 21 geführt ist. Bei dieser Art der Anordnung konnte die Reaktionsenthalpie ebenfalls zuverlässig durch das Kühlmedium abgeführt werden. Hierbei konnte durch die Anordnung der Gaszuführung 18 und des Rezirkulationsrohres 19 als Injektor die Rezirkulationsgeschwindigkeit erheblich gesteigert werden.

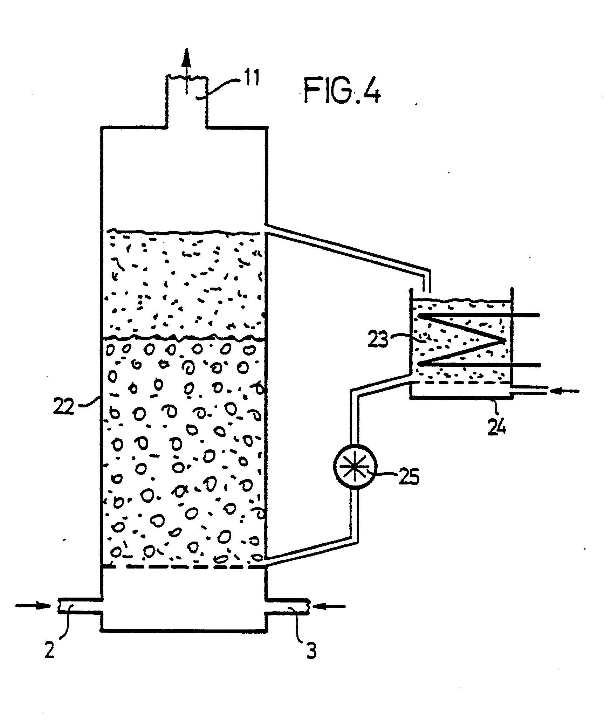

Figur 4 zeigt eine erfindungsgemäße Anordnung zur Durchführung des Verfahrens bei der das Wirbelgut aus dem Einrohr-Reaktor 22 — ausgeführt ohne ein innerhalb des Festbettes liegendes Rohr — abgeleitet wird und in einem außenliegenden Wirbelbett 23 — gelagert in einem oben offenen Behälter 24 — abgekühlt wird. Über eine Zellenradschleuse 25 konnte das gekühlte Wirbelgut in das Festbett zurückgeschleust werden. Die Reaktortemperatur konnte über die Menge des zurückgeführten Wirbelgutes beliebig eingestellt werden und war dabei sowohl radial als auch axial vollkommen einheitlich. Die Zuführung des gekühlten Wirbelgutes muß dabei nicht notwendigerweise direkt oberhalb oder unterhalb des perforierten Bodens erfolgen, sondern kann — evtl. als Teilstrom — in beliebiger Höhe über dem Boden angeordnet sein.

Die mit dem erfindungsgemäßen Verfahren und der erfindungsgemäßen Anordnung zur Durchführung des Verfahrens erzielten Vorteile liegen insbesondere darin, daß die Temperierung von Festbetten gegenüber konventionellen Verfahren deutlich verbessert werden konnte. Dies wirkt sich bei großtechnischen Verfahren dahingehend aus, daß durch die Vermeidung von lokalen Übertemperaturen in Festbetten (« hot spots ») Ausbeute und Selektivität vieler Verfahren verbessert werden können, und damit Einsatz- und Aufarbeitungskosten eingespart werden können. Durch erhebliche Reduzierung der Rohrzahl in den Reaktoren können bei der Fertigung großer Festbett-Reaktoren zudem Investitionskosten gesenkt werden.

**Patentansprüche**

1. Verfahren zur Temperierung einer in einem Rohrreaktor in Form eines Festbettes angeordneten Schüttung und zur gleichzeitigen Wärmeabfuhr aus dem Festbett oder Wärmezufuhr in das Festbett mittels eines in einem Wärmetauscher strömenden Wärmeträgers, dadurch gekennzeichnet, daß die Temperierung des Festbettes mittels eines wärmeabführenden oder wärmezuführenden, durch die Zwischenräume der Schüttung strömenden Wirbelgutes vorgenommen wird, wobei der Wärmetauscher im Festbett oder in einer oberhalb des Festbettes ausgebildeten, aus dem Wirbelgut bestehenden Wirbelschicht angeordnet ist.

2. Verfahren nach Anspruch 1, dadurch gekennzeichnet, daß das Wirbelgut in Zirkulation gehalten wird.

3. Verfahren nach Ansprüchen 1 und 2, dadurch gekennzeichnet, daß die Rezirkulation des Wirbelgutes in durch das Festbett hindurch führenden Rohren vorgenommen wird.

4. Verfahren nach Ansprüchen 1 und 2, dadurch gekennzeichnet, daß die Rezirkulation des Wirbelgutes außerhalb des Festbettes durchgeführt wird.

5. Verfahren nach Anspruch 4, dadurch gekennzeichnet, daß die Rezirkulation des Wirbelgutes entsprechend dem Wärmebedarf des Festbettes mittels geeigneter Förderorgane unabhängig von der Geschwindigkeit der reagierenden Gase im Festbett eingestellt wird.

6. Anordnung zur Durchführung des Verfahrens gemäß Ansprüchen 1 bis 3, bestehend aus mindestens einem Reaktionsrohr mit mehreren Stutzen für Ein- und Austritt der reagierenden Gase, mindestens einem perforierten Boden zur Aufnahme des als Schüttung ausgebildeten Festbettes, gekennzeichnet durch,

mindestens ein in Längsrichtung des Reaktionsrohres (1) innerhalb des Festbettes (5) angeordneten, an beiden Enden offenen Rohr (10) oder (13), das an einem Ende oberhalb des perforierten Bodens (4) endet,

einen innerhalb oder außerhalb der Wirbelschicht (9) angeordneten Wärmetauscher (12).

7. Anordnung zur Durchführung des Verfahrens gemäß Ansprüchen 1 bis 3, bestehend aus mindestens einem Reaktionsrohr mit einem Stutzen zum Austritt des Reaktionsgases, mindestens einem perforierten Boden zur Aufnahme des als Schüttung ausgebildeten Festbettes, gekennzeichnet durch,

ein in Längsrichtung des Reaktionsrohres (15) zentral innerhalb des festbettes (17) angeordneten, an beiden Enden offenen Rohr (19), das an einem Ende durch den perforierten Boden (16) hindurchgeführt ist,

einen innerhalb oder außerhalb der Wirbelschicht angeordneten Wärmetauscher (21)

ein gesondert in das Rohr (19) hineinführendes oder direkt oberhalb des Rohres (19) endendes Injektorrohr (18).

8. Anordnung zur Durchführung des Verfahrens gemäß Ansprüchen 6 oder 7, dadurch gekennzeichnet, daß der Wärmetauscher (12) als eine innerhalb des Festbettes oder der Wirbelschicht angeordnete Rohrschlange oder Rohrbündel (12) ausgebildet ist.

9. Anordnung zur Durchführung des Verfahrens gemäß Ansprüchen 6 oder 7, dadurch gekennzeichnet, daß der Wärmetauscher (12) als ein der Höhe der Wirbelschicht entsprechender Doppelmantel (14) ausgebildet ist.

**Claims**

1. A method of controlling the temperature of a fixed-bed charge in a tube reactor and at the same time removing heat from, or supplying heat to, the fixed bed by means of a heat-transfer medium flowing through a heat exchanger, wherein the temperature of the fixed bed is controlled by means of a fluidized material which removes or supplies heat and flows through the voids in the charge, the heat exchanger being located in the fixed bed or in a fluidized layer formed above the fixed bed and consisting of the fluidized material.

2. A method as claimed in claim 1, wherein the fluidized material is kept in circulation.

3. A method as claimed in claims 1 and 2, wherein the fluidized material is recirculated through tubes passing through the fixed bed.

4. A method as claimed in claims 1 and 2, wherein recirculation of the fluidized material is carried out outside the fixed bed.

5. A method as claimed in claim 4, wherein the fluidized material is recirculated in accordance with the heat requirement of the fixed bed, by suitable transporting means, independently of the velocity of the reacting gases in the fixed bed.

6. Apparatus for carrying out the method as claimed in claims 1 to 3, comprising at least one reaction tube having a plurality of connections for introducing and removing the reacting gases, and at least one perforated tray for receiving the fixed-bed charge, characterized by

at least one tube (10) or (13) which is arranged inside the fixed bed (5) and in the longitudinal direction of the reaction tube (1), is open at both ends and terminates, at one end, above the perforated tray (4), and

a heat exchanger (12) located inside or outside the fluidized layer (9).

7. Apparatus for carrying out the method as claimed in claims 1 to 3, comprising at least one reaction tube having a connection for removing the reacted gas, and at least one perforated tray for receiving the fixed-bed charge, characterized by

a tube (19) which is arranged centrally inside the fixed bed (17) and in the longitudinal direction of the reaction tube (15), is open at both ends and passes through the perforated tray (16) at one end,

a heat exchanger (21) located inside or outside the fluidized layer, and

a separate injector tube (18) which enters, or ends directly above, tube (19).

8. Apparatus for carrying out the method as claimed in claim 6 or 7, wherein the heat exchanger (12) is in the form of a tube bundle (12) or coiled tube arranged inside the fixed bed or the fluidized layer.

9. Apparatus for carrying out the method as claimed in claim 6 or 7, wherein the heat exchanger (12) is in the form of a jacket (14) whose height corresponds to the height of the fluidized layer.

**Revendications**

1. Procédé pour la mise en équilibre de température d'une masse de déversement disposée sous forme d'un lit fixe, dans un réacteur tubulaire et pour simultanément prélever de la chaleur du lit fixe et fournir de la chaleur au lit fixe, au moyen d'un véhicule de chaleur circulant dans l'échangeur thermique, caractérisé par le fait que la mise en équilibre de température du lit fixe est effectuée au moyen d'une matière en mouvement turbulent, prélevant ou fournissant de la chaleur, en circulant dans les interstices de la masse de déversement, l'échangeur thermique étant disposé dans le lit fixe ou dans une couche en mouvement turbulent constituée par la matière en mouvement turbulent, formée au-dessus du lit fixe.

2. Procédé selon la revendication 1, caractérisé par le fait que la matière en mouvement turbulent est maintenue en circulation.

3. Procédé selon les revendications 1 et 2, caractérisé par le fait que la recirculation de la matière en mouvement turbulent est effectuée dans des tubes traversant le lit fixe.

4. Procédé selon les revendications 1 et 2, caractérisé par le fait que la recirculation de la matière en mouvement turbulent est effectuée à l'extérieur du lit fixe.

5. Procédé selon la revendication 4, caractérisé par le fait que la recirculation de la matière en mouvement turbulent est réglée, en fonction du besoin en chaleur du lit fixe, au moyen d'organes d'amenée appropriés, indépendamment de la vitesse des gaz réagissant dans le lit fixe.

6. Dispositif pour la mise en œuvre du procédé selon les revendications 1 à 3, constitué par au moins un tube de réaction à plusieurs ajutages d'entrée et de sortie des gaz réagissants, au moins un fond perforé pour recevoir le lit fixe formé par la matière de déversement, caractérisé par :

au moins un tube (10) ou (13), ouvert à ses deux extrémités, disposé dans le lit fixe (5) en direction longitudinale du tube de réaction (1), et qui se termine, à une extrémité, au-dessus du fond perforé (4),

un échangeur thermique (12) disposé à l'intérieur ou à l'extérieur de la couche en mouvement turbulent (9).

7. Dispositif pour la mise en œuvre du procédé selon les revendications 1 à 3, constitué par au moins un tube de réaction à un ajutage de sortie du gaz de réaction, au moins un fond perforé pour recevoir le lit fixe formé par la matière de déversement, caractérisé par :

un tube (19) ouvert à ses deux extrémités, disposé centralement dans le lit fixe (17), en direction longitudinale du tube de réaction (15), et qui passe, par une extrémité, à travers le fond perforé (16)

un échangeur thermique (21) disposé à l'intérieur ou à l'extérieur de la couche en mouvement turbulent

un tube injecteur (18) introduit séparément dans le tube (19) ou se terminant directement au-dessus du tube (19).

8. Dispositif pour la mise en œuvre du procédé selon les revendications 6 ou 7, caractérisé par le fait que l'échangeur thermique (12) est formé par un serpentin ou faisceau tubulaire (12) disposé dans le lit fixe ou dans la couche en mouvement turbulent.

9. Dispositif pour la mise en œuvre du procédé selon les revendications 6 ou 7, caractérisé par le fait que l'échangeur thermique (12) est formé par une enveloppe double (14) correspondant à la hauteur de la couche en mouvement turbulent.

FIG.1

FIG.1a
A-A

FIG.2

FIG.2a
B-B

FIG.3

FIG.4